# EUROPÄISCHE PATENTSCHRIFT

(11) **EP 3 251 012 B1**
(45) Veröffentlichungstag und Bekanntmachung des Hinweises auf die Patenterteilung: **15.07.2020**
(21) Anmeldenummer: 15805463.5
(22) Anmeldetag: 04.12.2015
(51) Int. Cl.: G06F 11/26

(54) **PRÜFSYSTEM ZUR PRÜFUNG EINES COMPUTERS EINES COMPUTERSYSTEMS IN EINEM PRÜFNETZWERK**
CHECKING SYSTEM FOR CHECKING A COMPUTER OF A COMPUTER SYSTEM IN A CHECKING NETWORK
SYSTÈME DE VÉRIFICATION POUR LA VÉRIFICATION D'UN ORDINATEUR D'UN SYSTÈME D'ORDINATEURS DANS UN RÉSEAU DE VÉRIFICATION

(30) Priorität: 30.01.2015 DE 102015101388
(43) Veröffentlichungstag der Anmeldung: 06.12.2017
(73) Patentinhaber: Deutsche Telekom AG, 53113 Bonn (DE)
(72) Erfinder: EGGERT, Markus, 53773 Hennef (DE); HAUENSTEIN, Daniel, 53115 Bonn (DE)
(74) Vertreter: Vossius & Partner Patentanwälte Rechtsanwälte mbB
(86) Internationale Anmeldenummer: PCT/EP2015/078671
(87) Internationale Veröffentlichungsnummer: WO 2016/119953

(56) Entgegenhaltungen:
- WO-A1-2012/166591

## Beschreibung

Die vorliegende Erfindung betrifft ein Prüfsystem zur Prüfung eines Computers eines Computersystems in einem Prüfnetzwerk, und ein Verfahren zum Prüfen eines Computers eines Computersystems in einem Prüfnetzwerk. Die Erfindung betrifft insbesondere ein Verfahren zur Automatisierung von Tests oder Sicherheitstests in einem Kommunikationsnetzwerk und einen Simulationsserver (Honeypot) zur Simulation von Test-Objekten.
Um den Zustand eines Netzelements, beispielsweise eines Servers, Routers, Switches, etc. zu überwachen und z.B. seine ordnungsgemäße Konfiguration oder die Aktualität des Softwarestands zu prüfen sind im Wesentlichen zwei Methoden etabliert. Zum einen ist dies die Verwendung einer zentralen Prüfinstanz mit direktem Zugriff auf alle Netzelemente und zum anderen die Verwendung von sogenannten Agenten, d.h. zusätzliche Software-Pakete auf allen Netzelementen, die mit einer zentralen Prüfinstanz kommunizieren. Bei einem direkten Zugriff der zentralen Prüfinstanz auf alle Netzwerkelemente oder der Installation von Agenten auf den Netzelementen treten jedoch Probleme bezüglich Sicherheit und Komplexität auf. Durch den direkten Zugriff auf die Netzwerkelemente können sicherheitskritische Daten von der Prüfinstanz bzw. den Agenten eingesehen und unter Umständen manipuliert werden. Das Installieren eines Agenten auf jedem Netzelement stellt zudem hohe Komplexitätsanforderungen, insbesondere bei der Prüfung von großen Computersystemen mit einer Vielzahl von Computern oder Servern.
Das Dokument WO 2012/166591 offenbart ein Prüfsystem zur Prüfung eines ein Testobjekt bildenden Computers eines Computersystems in einem Prüfnetzwerk.
Es ist die Aufgabe der vorliegenden Erfindung, ein Konzept für ein einfaches und sicheres Prüfen von Computern eines Computersystems zu schaffen.
Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Vorrichtungen, Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Vorrichtungen, Verfahren und Systeme können genutzt werden, um Softwareversionen, Patchversionen und Konfigurationen von Computern eines Computersystems zu ermitteln. Ein Patch bezeichnet dabei eine Korrekturauslieferung für Software oder Daten aus Endanwendersicht, um Sicherheitslücken zu schließen, Fehler zu beheben oder bislang nicht vorhandene Funktionen nachzurüsten. Bei einigen Herstellern heißen diese Aktualisierungen auch Service Pack, wenn sie aus mehreren zusammengefassten Patches bestehen.

Gemäß einem ersten Aspekt betrifft die Erfindung ein Prüfsystem zur Prüfung eines bestimmten Computers eines bestimmten Computersystems in einem Prüfnetzwerk, wobei das Prüfnetzwerk eine Prüfinstanz zur Prüfung von Computern des Computersystems umfasst, wobei der bestimmte Computer ein Testobjekt ist, und wobei das Prüfsystem die folgenden Merkmale umfasst: einen Simulationsserver, welcher ausgebildet ist, das Testobjekt zu emulieren; und eine Steuerungsinstanz zum Steuern des Simulationsservers, wobei die Steuerungsinstanz ausgebildet ist, den Simulationsserver anzuweisen, ein virtuelles Testobjekt zur Emulation des Testobjekts zu erzeugen, wobei die Steuerungsinstanz ferner ausgelegt ist, die Prüfinstanz anzuweisen, das durch den Simulationsserver erzeugte virtuelle Testobjekt anstelle des bestimmten Computers zu prüfen.

Ein derartiges Prüfsystem bietet den Vorteil eines einfachen und sicheren Prüfens von Computern eines Computersystems. Mit dem Simulationsserver kann das Testobjekt emuliert werden, so dass anstelle des realen Testobjekts das virtuelle Testobjekt geprüft werden kann. Damit werden Sicherheitsprobleme, die beim direkten Zugriff auf den Computer vorhanden sind, ausgeräumt, da nicht der reale Computer sondern das virtuelle Testobjekt geprüft wird. Falls von der Prüfinstanz eine Sicherheitsbedrohung ausgeht, so trifft diese das virtuelle Testobjekt auf dem Simulationsserver, nicht aber den realen Computer selbst. Der Simulationsserver schottet damit den Computer von der Prüfinstanz ab und bildet einen "Honeypot", d.h. der Simulationsserver dient als Ablenkmittel, um potentielle Schadsoftware oder Viren auf der Prüfinstanz dazu zu verleiten, den Simulationsserver anzugreifen bzw. zu befallen anstelle des realen Computers. Damit erhöht sich die Sicherheit beim Prüfen des Computersystems.

Weiterhin ist ein solcher Simulationsserver ohne hohe Komplexität realisierbar. Dadurch, dass jeder Computer auf die gleiche Art und Weise mittels des Simulationsservers geprüft werden kann, braucht die Prüfinstanz nur mit dem Simulationsserver zu kommunizieren, um die Prüfaufgaben zu implementieren. Es entfällt das Installieren von eigenen Softwarepaketen auf allen zu prüfenden Computern, was beispielsweise bei einer Realisierung von Agenten zum Prüfen der einzelnen Computer notwendig wäre. Nach Beendigung der Prüfung eines Computers kann das virtuelle Testobjekt auf dem Simulationsserver auf einfache Weise wieder gelöscht werden und das nächste virtuelle Testobjekt kann auf dem Simulationsserver erzeugt werden.

Gemäß dem ersten Aspekt ist das Prüfsystem ausgebildet, Daten des Testobjekts zu empfangen und das Testobjekt basierend auf den empfangenen Daten auf dem Simulationsserver zu emulieren.

Dies bringt den Vorteil, dass das Testobjekt basierend auf Daten des Testobjekts emuliert werden kann, so dass hier eine Auswahl der Daten getroffen werden kann, die zum Emulieren relevant sind. Damit braucht nicht das gesamte Testobjekt, d.h. der Computer mit aller installierter Software und allen Daten nachgebildet werden, sondern es reicht, wenn die Emulation basierend auf einer Auswahl von Daten erzeugt wird. Beispielsweise kann der Computer seine aktuell installierte Software, Patches, und/oder Konfigurationen dem Simulationsserver übermitteln, so dass das virtuelle Testobjekt die auf dem Computer installierte Software, Patches, Konfigurationen nachbilden kann.

In einer Ausführungsform des Prüfsystems gemäß dem ersten Aspekt umfassen die Daten des Testobjekts zumindest eine der folgenden Informationen: Softwarestände von auf dem Testobjekt installierter Software, Patchstände von auf dem Testobjekt installierter Patches, Konfigurationsstände von Konfigurationen des Testobjekts.
Dies bringt den Vorteil, dass die Emulation des Computers basierend auf einer Auswahl von Daten erzeugt werden kann, die für die Prüfinstanz gerade relevant ist. Der Computer kann seine aktuell installierte Software, Patches, und/oder Konfigurationen dem Simulationsserver übermitteln, so dass das virtuelle Testobjekt die auf dem Computer installierte Software, Patches, Konfigurationen nachbilden kann. Die Auswahl kann von der Prüfinstanz gesteuert erfolgen.
Gemäß dem ersten Aspekt ist das Prüfsystem ausgebildet, die Daten des Testobjekts durch einen direkten Dateitransfer zwischen dem Testobjekt und dem Prüfsystem oder basierend auf einer Interaktion mit einem Nutzer des Prüfsystems zu empfangen.
Dies bringt den Vorteil, dass die Daten des Testobjekts flexibel auf den Simulationsserver gebracht werden können. Zum einen ist ein automatischer Filetransfer möglich, der sowohl von dem Testobjekt als auch dem Simulationsserver initiiert werden kann. Zum anderen ist eine manuelle (oder sprachliche oder taktile) Interaktion mit einem Nutzer möglich, so dass ein Betreiber des Prüfsystems spezielle Computer prüfen lassen kann, beispielsweise, wenn für einen solchen ein Sicherheitsverdacht besteht.
Gemäß dem ersten Aspekt ist die Steuerungsinstanz ausgebildet, in regelmäßigen Abständen zu prüfen, ob Daten eines neuen Testobjekts auf dem Simulationsserver vorhanden sind, und bei Vorhandensein der Daten den Simulationsserver anzuweisen, ein virtuelles Testobjekt zur Emulation des neuen Testobjekts zu erzeugen und die Prüfinstanz anzuweisen, das virtuelle Testobjekt zu prüfen.
Dies bringt den Vorteil, dass die Computer des Computersystems sukzessive durch Emulation entsprechender virtueller Testobjekte auf dem Simulationsserver geprüft werden können. Damit ist es möglich eine hohe Anzahl von Testobjekten über einen einzigen Simulationsserver zu prüfen. Das Prüfsystem ist somit effizient realisiert, der Aufwand zum Prüfen einer hohen Zahl von Testobjekten ist gering. Für jedes Testobjekt kann zudem das gleiche Verfahren angewandt werden, um das virtuelle Testobjekt zu erzeugen.

In einer Ausführungsform des Prüfsystems gemäß dem ersten Aspekt ist die Steuerungsinstanz ausgebildet, über eine anwendungsprogrammierbare Schnittstelle Daten und weitere Parameter zur Steuerung zu empfangen und den Simulationsserver anzuweisen, ein virtuelles Testobjekt zur Emulation des neuen Testobjekts zu erzeugen und die Prüfinstanz anzuweisen, das virtuelle Testobjekt zu prüfen.

Dies bringt den Vorteil, dass die Steuerungsinstanz anwenderspezifisch programmiert bzw. eingestellt werden kann und somit eine hohe Flexibilität bietet.

In einer Ausführungsform des Prüfsystems gemäß dem ersten Aspekt ist die Steuerungsinstanz ausgebildet, Prüfergebnisse der Prüfung des virtuellen Testobjekts von der Prüfinstanz zu empfangen.

Dies bringt den Vorteil, dass alle Prüfergebnisse auf der Steuerungsinstanz verfügbar und leicht einsehbar sind. Beispielsweise kann die Steuerungsinstanz die Prüfergebnisse dann grafisch aufbereiten, um die Ergebnisse übersichtlich darzustellen.

In einer Ausführungsform des Prüfsystems gemäß dem ersten Aspekt umfasst das Prüfsystem eine erste Prüfschnittstelle zwischen der Steuerungsinstanz und der Prüfinstanz, wobei die erste Prüfschnittstelle eine anwendungsprogrammierbare Schnittstelle umfasst.

Dies bringt den Vorteil, dass über die erste Prüfschnittstelle die Prüfinstanz gesteuert bzw. programmiert werden kann. Damit lässt sich das Prüfsystem mit verschiedenen Prüfinstanzen einsetzen, die beispielsweise von verschiedenen Herstellern kommen können.

In einer Ausführungsform des Prüfsystems gemäß dem ersten Aspekt umfasst das Prüfsystem eine zweite Prüfschnittstelle zwischen dem Simulationsserver und der Prüfinstanz, wobei die zweite Prüfschnittstelle ausgebildet ist, von der Prüfinstanz bereitgestellte Plug-Ins zum Prüfen des virtuellen Testobjekts auf den Simulationsserver zu laden.

Dies bringt den Vorteil, dass über die zweite Prüfschnittstelle die Prüfinstanz das Prüfen des virtuellen Testobjekts auf dem Simulationsserver steuern kann. Über die von der Prüfinstanz bereitgestellten Plug-Ins können die Prüfaufgaben definiert werden, die auf dem Simulationsserver stattfinden.

In einer Ausführungsform des Prüfsystems gemäß dem ersten Aspekt ist der Simulationsserver ausgebildet, über die von der Prüfinstanz bereitgestellten Plug-Ins das virtuelle Testobjekt nach einem vorbestimmten Softwarestand, Patchstand oder Konfigurationsstand zu scannen.

Dies bringt den Vorteil, dass eine Abfrage von Softwareständen, Patchständen und/oder Konfigurationen der Computer des Computersystems schnell und effizient erfolgen kann. Damit kann schnell und einfach Einblick gewonnen werden in den Software/Patch/Konfigurationsstand von großen Computersystemen, wie beispielsweise Vermittlungsstellen mit einer Vielzahl von Servern zum Vermitteln von Kommunikationsverbindungen oder Routern mit einer Vielzahl von Prozessormodulen zum Routen von Verbindungen etc.

In einer Ausführungsform des Prüfsystems gemäß dem ersten Aspekt verfügt der Simulationsserver über Zugangsdaten zu dem Testobjekt, die nur auf dem virtuellen Testobjekt und nur für einen Zeitraum des Prüfens des virtuellen Testobjekts gültig sind.

Dies bringt den Vorteil erhöhter Sicherheit, da das Prüfsystem, das beispielsweise von einem externen Anbieter stammen kann und daher als unsicher eingestuft werden kann, keinen direkten Zugang zum Computer bzw. dem realen Testobjekt erhält. Wenn die Zugangsdaten nur auf dem virtuellen Testobjekt gültig sind, kann die Sicherheit des realen Testobjekts nicht verletzt werden. Wenn die Zugangsdaten nur über einen Prüfzeitraum gültig sind, lässt sich ein Missbrauch zu anderen Zeiten ausschließen.

Gemäß einem zweiten Aspekt betrifft die Erfindung ein Verfahren zum Prüfen eines bestimmten Computers eines bestimmten Computersystems in einem Prüfnetzwerk, mittels eines Prüfsystems, wobei das Prüfsystem einen Simulationsserver und eine Steuerungsinstanz umfasst, wobei das Prüfnetzwerk eine Prüfinstanz zur Prüfung von Computern des Computersystems umfasst, wobei der bestimmte Computer ein Testobjekt ist, wobei das Verfahren die folgenden Schritte umfasst: Erzeugen eines virtuellen Testobjekts zur Emulation des Testobjekts auf einem Simulationsserver; Anweisen der Prüfinstanz, das auf dem Simulationsserver erzeugte virtuelle Testobjekt anstelle des bestimmten Computers zu prüfen.

Ein derartiges Verfahren bietet den Vorteil eines einfachen und sicheren Prüfens von Computern eines Computersystems. Mit dem Erzeugen des virtuellen Testobjekts auf dem Simulationsserver kann das Testobjekt emuliert werden, so dass anstelle des realen Testobjekts das virtuelle Testobjekt geprüft werden kann. Damit werden Sicherheitsprobleme, die beim direkten Zugriff auf Computer vorhanden sind, ausgeräumt, da nicht der reale Computer sondern das virtuelle Testobjekt geprüft wird. Damit erhöht das Verfahren die Sicherheit beim Prüfen des Computersystems.

Weiterhin kann mit dem Verfahren jeder Computer auf die gleiche Art und Weise mittels des Simulationsservers geprüft werden. Nach Beendigung des Prüfens eines Computers kann das virtuelle Testobjekt auf dem Simulationsserver auf einfache Weise wieder gelöscht werden und das nächste virtuelle Testobjekt kann auf dem Simulationsserver erzeugt und geprüft werden. Damit ist das Verfahren leicht und ohne großen Aufwand zu realisieren.

In einer Ausführungsform des Verfahrens gemäß dem zweiten Aspekt umfasst das Verfahren ferner: Scannen des virtuellen Testobjekts nach zumindest einer der folgenden Daten: Softwarestände von auf dem Testobjekt installierter Software, von auf dem Testobjekt installierter Patches, Konfigurationsstände von Konfigurationen des Testobjekts.

Dies bringt den Vorteil, dass eine Abfrage von Softwareständen, Patchständen und/oder Konfigurationen der Computer des Computersystems mit dem Verfahren schnell und effizient erfolgen kann. Damit kann schnell und einfach Einblick gewonnen werden in den Software/Patch/Konfigurationsstand von großen Computersystemen.

Gemäß dem zweiten Aspekt umfasst das Verfahren ferner: Prüfen ob Daten des Testobjekts auf dem Simulationsserver vorhanden sind; bei Vorhandensein von Daten des Testobjekts: Anweisen des Simulationsservers, ein virtuelles Testobjekt basierend auf den Daten des Testobjekts zu erzeugen; Anweisen der Prüfinstanz, das virtuelle Testobjekt zu prüfen; Empfangen von Ergebnissen der Prüfung des virtuellen Testobjekts; und Löschen des virtuellen Testobjekts auf dem Simulationsserver.

Dies bringt den Vorteil, dass mit Hilfe dieser Schritte sich das Verfahren schnell und unkompliziert realisieren lässt. Diese fünf Schritte des Prüfens, Anweisens des Simulationsservers, Anweisens der Prüfinstanz, Empfangens und Löschens können für eine beliebige Anzahl von Testobjekten nacheinander oder unter Umständen auch parallel ausgeführt werden, um schnell Prüfergebnisse zu erhalten.

Gemäß einem dritten Aspekt betrifft die Erfindung ein Computerprogramm für eine anwendungsprogrammierbare Schnittstelle zwischen der Steuerungsinstanz eines Prüfsystems gemäß dem ersten Aspekt und einer Prüfinstanz in einem Prüfnetzwerk, umfassend: ein erstes Programmmodul, das ausgebildet ist, der Prüfinstanz eine Identifikation eines von dem Simulationsserver erzeugten virtuellen Testobjekts zu übermitteln; ein zweites Programmmodul, das ausgelegt ist, die Prüfinstanz anzuweisen, das virtuelle Testobjekt anstelle des bestimmten Computers zu prüfen; und ein drittes Programmmodul, das ausgelegt ist, die Prüfinstanz anzuweisen, Ergebnisse der Prüfung des virtuellen Testobjekts an die Steuerungsinstanz zu übermitteln.

Ein solches Computerprogramm bietet den Vorteil, dass es eine anwendungsprogrammierbare Schnittstelle zu einer Prüfinstanz schafft. Damit kann eine beliebige Prüfinstanz in dem Prüfsystem verwendet werden, wobei die Anpassung der Prüfinstanz an den Simulationsserver über die anwendungsprogrammierbare Schnittstelle erfolgt.

In einer Ausführungsform des Computerprogramms gemäß dem dritten Aspekt umfasst das Computerprogramm ein viertes Programmmodul, das ausgelegt ist, die Prüfinstanz anzuweisen, das virtuelle Testobjekt nach zumindest einer der folgenden Daten zu scannen: Softwarestände von auf dem Testobjekt installierter Software,

Patchstände von auf dem Testobjekt installierter Patches, Konfigurationsstände von Konfigurationen des Testobjekts.

Dies bringt den Vorteil, dass über die anwendungsprogrammierbare Schnittstelle eine Abfrage von Softwareständen, Patchständen und/oder Konfigurationen der Computer des Computersystems schnell und effizient erfolgen kann. Damit können die wesentlichen Prüfaufgaben der Prüfinstanz schnell und einfach angewiesen und ausgeführt werden.

Weitere Ausführungsbeispiele werden Bezug nehmend auf die beiliegenden Zeichnungen erläutert. Es zeigen:
Fig. 1 eine schematische Darstellung eines Prüfsystems 100 gemäß einer ersten Ausführungsform;
Fig. 2 eine schematische Darstellung eines Prüfsystems 200 gemäß einer zweiten Ausführungsform;
Fig. 3 eine schematische Darstellung eines Verfahrens 300 zum Prüfen eines Computers eines Computersystems gemäß einer Ausführungsform; und
Fig. 4 eine schematische Darstellung eines Anwendungsprogramms 400 einer anwendungsprogrammierbaren Schnittstelle zwischen einer Steuerungsinstanz und einer Prüfinstanz gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

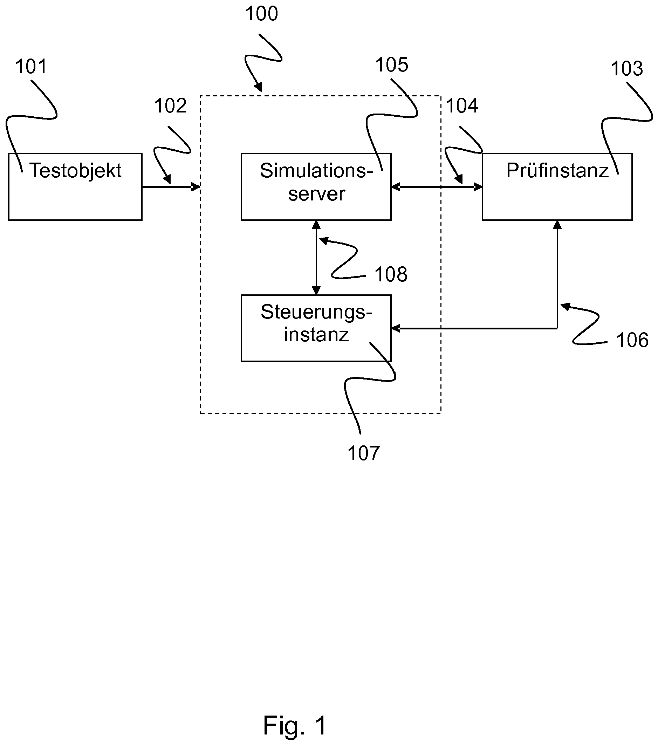

Fig. 1 zeigt eine schematische Darstellung eines Prüfsystems 100 gemäß einer ersten Ausführungsform. Das Prüfsystem 100 dient der Prüfung eines bestimmten Computers 101 eines bestimmten Computersystems in einem Prüfnetzwerk. D.h. es kann ein bestimmter Computer aus einem Computersystem ausgewählt und einer Prüfung unterzogen werden. Ferner kann ein bestimmtes Computersystem aus einer Vielzahl von verschiedenen Computersystemen ausgewählt und der Prüfung unterzogen werden. Das Prüfnetzwerk umfasst eine Prüfinstanz 103 zur Prüfung von Computern des Computersystems. Der bestimmte Computer 101 ist hierbei das Testobjekt 101.
Das Prüfsystem 100 umfasst einen Simulationsserver 105 und eine Steuerungsinstanz 107, die über eine Steuerungsschnittstelle 108 gekoppelt sind. Der Simulationsserver 105 dient dazu, das Testobjekt 101 zu emulieren. Die Steuerungsinstanz 107 dient dazu, den Simulationsserver 105 zu steuern. Die Steuerungsinstanz weist den Simulationsserver 105 an, ein virtuelles Testobjekt zur Emulation des Testobjekts 101 zu erzeugen und weist die Prüfinstanz 103 an, das durch den Simulationsserver 105 erzeugte virtuelle Testobjekt anstelle des bestimmten Computers 101 zu prüfen.
Das Prüfsystem 100 empfängt Daten 111 des Testobjekts 101 über eine Testschnittstelle 102 zwischen dem Testobjekt und dem Prüfsystem 100 und emuliert das Testobjekt 101 basierend auf den empfangenen Daten 111. Die Daten 111 des Testobjekts 101 können Softwarestände von auf dem Testobjekt 101 installierter Software, Patchstände von auf dem Testobjekt 101 installierter Patches, Konfigurationsstände von Konfigurationen des Testobjekts 101 oder andere Daten sein. Die Testschnittstelle 102 kann sowohl eine einfache Dateitransfer-Schnittstelle (basierend auf Protokollen wie FTP, SCP, SMTP, ...) als auch eine anwendungsprogrammierbare Schnittstelle sein, über die nicht nur Konfigurationsdaten als auch weitere Parameter zur Steuerung des Prüfsystems übergeben werden können.
Das Prüfsystem 100 kann die Daten 111 des Testobjekts 101 durch einen direkten Dateitransfer zwischen dem Testobjekt 101 und dem Prüfsystem 100 oder basierend auf einer Interaktion mit einem Nutzer des Prüfsystems 100 (in Figur 1 nicht dargestellt) empfangen. Empfängt das Prüfsystem 100 Daten 111 eines Testobjekts 101, so weist die Steuerungsinstanz 107 den Simulationsserver 105 an, ein virtuelles Testobjekt zur Emulation des neuen Testobjekts 101 zu erzeugen und weist die Prüfinstanz 103, das virtuelle Testobjekt 109 zu prüfen. Die Steuerungsinstanz 107 kann Prüfergebnisse der Prüfung des virtuellen Testobjekts von der Prüfinstanz empfangen.

Das Prüfsystem 100 umfasst eine erste Prüfschnittstelle 106 zwischen der Steuerungsinstanz 107 und der Prüfinstanz 103. Die erste Prüfschnittstelle 106 kann eine anwendungsprogrammierbare Schnittstelle sein. Das Prüfsystem 100 umfasst eine zweite Prüfschnittstelle 104 zwischen dem Simulationsserver 105 und der Prüfinstanz 103. Über die zweite Prüfschnittstelle 104 können von der Prüfinstanz 103 bereitgestellte Plug-Ins zum Prüfen des virtuellen Testobjekts 109 auf den Simulationsserver 105 geladen werden. Der Simulationsserver 105 kann über die von der Prüfinstanz 103 bereitgestellten Plug-Ins das virtuelle Testobjekt nach einem vorbestimmten Softwarestand, Patchstand oder Konfigurationsstand scannen.

Der Simulationsserver 105 verfügt über Zugangsdaten zu dem Testobjekt 101. Diese Zugangsdaten können beispielsweise nur auf dem virtuellen Testobjekt gültig sind. Ferner können diese Zugangsdaten nur für einen Zeitraum des Prüfens des virtuellen Testobjekts gültig sein.

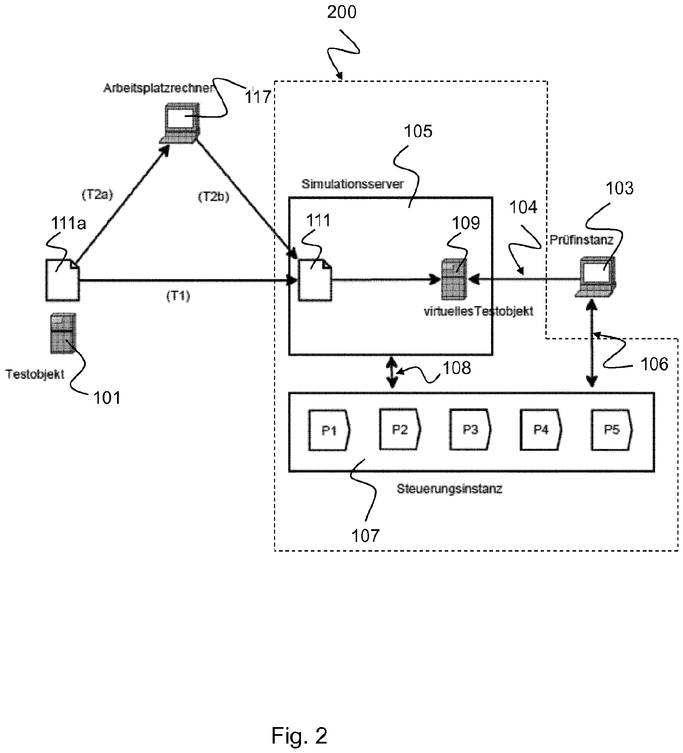

Fig. 2 zeigt eine schematische Darstellung eines Prüfsystems 200 gemäß einer zweiten Ausführungsform. Das Prüfsystem 200 kann dem oben zu Figur 1 beschriebenen Prüfsystem 100 entsprechen. Die Testschnittstelle 102 kann direkt zwischen Testobjekt 101 und Prüfsystem 200 implementiert sein, so dass eine auf dem Testobjekt generierte Datei 111a beispielsweise über Dateitransfer T1 direkt zum Prüfsystem 200 übertragen werden kann. Alternativ kann die Testschnittstelle 102 über einen zwischen Testobjekt 101 und Prüfsystem 200 geschalteten Arbeitsplatzrechner verlaufen, so dass eine auf dem Testobjekt generierte Datei 111a beispielsweise mittels eines ersten Dateitransfers T2a erst zum Arbeitsplatzrechner 117 und danach beispielsweise mittels eines zweiten Dateitransfers T2b von dem Arbeitsplatzrechner 117 zum Prüfsystem 200 übertragen werden kann. Auf dem Arbeitsplatzrechner 117 hat ein Nutzer die Möglichkeit, die übertragene Datei 111a zu verändern, so dass die auf dem Prüfsystem 200 vorliegende Datei 111 unter Umständen sich von der auf dem Testobjekt 101 erzeugten Datei 111a unterscheiden kann.

Die Steuerungsinstanz 107 kann auf einem Computer implementiert sein, beispielsweise auf einem Server. Sie kann auch auf dem Simulationsserver 105 selbst implementiert sein, so dass die Steuerschnittstelle 108 eine interne Schnittstelle bildet. Die Steuerungsinstanz 107 kann ferner als eine Applikationssoftware (App) auf einem separaten Rechner oder Prozessor implementiert sein, beispielsweise einem Steuerungsrechner zur Steuerung des Simulationsservers 105.

In Figur 2 ist zu erkennen, dass das virtuelle Testobjekt 109 auf dem Simulationsserver 105 erzeugt wird.

Figur 2 zeigt das Prüfsystem 200, bei dem eine zentrale aktive Prüfinstanz 103 verwendet wird, die aber nur auf den Simulationsserver 105 zugreift, der die zu testenden Objekte 101 unter Verwendung von zuvor von den Testobjekten 101 erhaltenen Daten 111 simuliert. Dazu werden die Daten 111a auf dem Testobjekt 101 erzeugt und auf den Simulationsserver 105 transferiert. Dies kann entweder durch einen direkten Dateitransfer T1 zwischen den Testobjekten 101 und dem Simulationsserver 105 umgesetzt werden oder manuell durch einen Nutzer unter Verwendung eines optionalen Arbeitsplatzrechners 117 initiiert werden (T2a und T2b). Die Steuerungsinstanz 107 prüft in regelmäßigen Abständen, ob neue Dateien 111 auf dem Simulationsserver 105 vorhanden sind (Prozessschritt P1). Wenn dies der Fall ist, dann wird auf dem Simulationsserver 105 ein virtuelles Testobjekt 109 erzeugt, welches unter Verwendung der Daten 111 des Testobjekts 101 das Testobjekt 101 gegenüber der Testinstanz bzw. Prüfinstanz 103 simuliert (Prozessschritt P2). Die Steuerungsinstanz 107 triggert dann die Prüfinstanz 103 und weist sie an, das virtuelle Testobjekt 109 zu prüfen (Prozessschritt P3). Falls dabei eine interne Prüfung notwendig ist, so können Zugangsdaten verwendet werden, die nur auf dem virtuellen Testobjekt 109 und nur für den Zeitraum des Tests gültig sind. Nach Beendigung der Tests stellt die Prüfinstanz 103 der Steuerungsinstanz 107 die Prüfergebnisse zur Verfügung (Prozessschritt 4). Danach beendet die Steuerungsinstanz 107 die Ausführung des virtuellen Testobjekts 109 auf dem Simulationsserver 105 (Prozessschritt P5).

Ein solches Prüfsystem 200 bietet diverse Vorteile gegenüber dem direkten Zugriff einer Prüfinstanz 103 auf ein Testobjekt 101, insbesondere wenn eine Vielzahl von Testobjekten 101 zu prüfen ist. Ebenso ist eine zentrale Instanz, beispielsweise bei Nutzung der Prüfinstanz 103 als zentraler Instanz, die Zugriff auf viele Netzelemente benötigt, immer mit Sicherheitsrisiken verbunden, da sie einerseits netzwerktechnisch Zugriff auf alle Netzelemente benötigt und andererseits auch häufig über Zugangsdaten (z.B. Benutzername und Passwort) des Testobjekts 101 verfügen muss. Bei einer Kompromittierung der Prüfinstanz 103 hätte ein Angreifer damit Zugriff auf eine Vielzahl von Netzelementen. Dieses Risiko existiert bei dem hier vorgestellten Prüfsystem nicht, da die Prüfinstanz 103 keinen direkten Zugriff auf die Netzelemente hat sondern der Zugriff über das Prüfsystem 200 mit Simulationsserver 105 und Steuerungsinstanz 107 erfolgt.

In einer Ausführungsform des Prüfsystems 200 bildet der Simulationsserver 105 einen Honeypot bzw. Honigtopf, d.h. einen Server, der die Netzwerkdienste eines Computers, eines ganzen Rechnernetzes oder das Verhalten eines Anwenders simuliert. Der Honeypot kann neben der Abschottung des Testobjekts 101 gegenüber einem Angreifer dazu verwendet werden, um Informationen über Angriffsmuster und Angreiferverhalten zu erhalten. Erfolgt ein Zugriff auf einen derartigen virtuellen Dienst oder Nutzer, können alle damit verbundenen Aktionen protokolliert und gegebenenfalls ein Alarm ausgelöst werden. Das wertvolle reale Netzwerk bzw. Computersystem bleibt von Angriffsversuchen möglichst verschont, da es besser gesichert ist als der Honeypot bzw. der Simulationsserver 105. Die Idee hinter Honeypot-Diensten des Simulationsservers 105 ist, in einem Netzwerk einen oder mehrere Honeypots zu installieren, die keine vom Anwender selbst oder seinen Kommunikationspartnern benötigten Dienste bieten und daher im Normalbetrieb niemals angesprochen werden. Ein Angreifer, der nicht zwischen echten Servern bzw. Programmen und Honeypots unterscheiden kann und routinemäßig alle Netzkomponenten auf Schwachstellen untersucht, wird früher oder später die von einem Honeypot angebotenen Dienste in Anspruch nehmen und dabei von dem Honeypot protokolliert werden. Da es ein ungenutztes System ist, ist jeder Zugriff darauf als ein möglicher Angriffsversuch zu werten. Der Simulationsserver 105 dient somit zugleich als virtuelles Testobjekt, um das Prüfen der Computer des Computersystems zu ermöglichen, als auch als Honeypot, um Angriffe auf das Computernetzwerk abzuwehren und zu protokollieren.

Die Prüfinstanz 103 kann ein herstellerspezifischer Server sein, über den eine Prüfung des Computersystems erfolgt. Beispielsweise kann die Prüfinstanz 103 einen Nessus-Server umfassen. Nessus ist ein Netzwerk- und Sicherheits-Scanner. Er basiert auf dem Client-Server-Prinzip, das heißt, dass auf einem Rechner der Nessus-Server gestartet wird und man sich anschließend mit einem oder mehreren Clients entweder vom lokalen oder einem entfernten Computer aus verbinden kann. Abgesichert wird dies durch SSL-Zertifikate und Passwörter. Mit dem Start des Servers werden automatisch die Plug-ins geladen. Mit diesen Plug-ins lassen sich diverse Sicherheitslücken des Betriebssystems bzw. der Dienste, die auf dem zu scannenden Host laufen, finden. Die Plug-ins werden in der Nessus-eigenen Skriptsprache "Nessus Attack Scripting Language" (NASL) erstellt. Mit Hilfe des Clients-Programmes verbindet man sich darauf mit dem Server und stellt eine Sitzung (*Session*) her, in welcher man die Plug-ins, den Zielhost und andere Einstellungen eintragen oder verändern kann. Wurde der Scan auf einen Host ausgeführt, gibt der Nessus-Client eine Übersicht über die offenen Ports und eventuell gefundene Sicherheitslücken aus.

Beispielsweise kann die Prüfinstanz 103 einen Qualys-Server umfassen. Mit einem solchen Server kann das Computersystem gescannt werden. Sicherheitslücken bzw. Gefährdungspotenziale können aufgedeckt werden und die geeigneten Patche zum Beheben der Sicherheitslücken können bereitgestellt werden. Mit dem Qualys-Server können interaktive Scan Reporte aufgezeichnet werden, beispielsweise pro Bedrohung oder pro Patch. Webseiten und Apps können auf Top-Risiken und Schadsoftware getestet werden. Ferner können Computer bzgl. Sicherheit bewertet werden, beispielsweise bezüglich SCAP (Security Content Automation Protocol) oder OWASP (Open Web Application Security Project). SCAP ist eine Methode für die Verwendung bestimmter Standards zur automatisierten Vulnerability-Management-, Mess- und Policy-Compliance-Auswertung. OWASP ist eine Standardisierungsorganisation mit dem Ziel, die Sicherheit von Anwendungen und Diensten im World Wide Web zu verbessern.

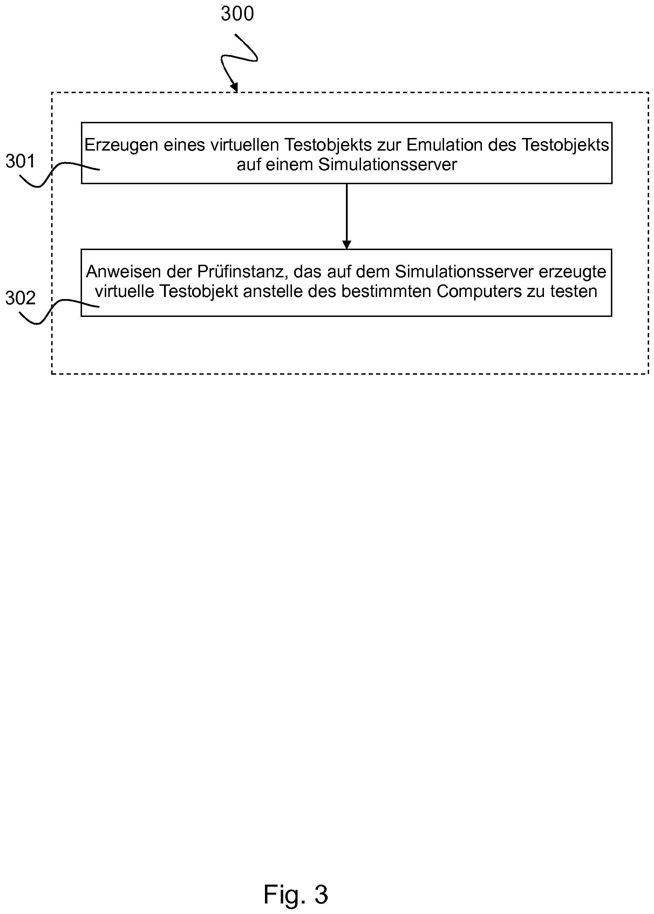

Fig. 3 zeigt eine schematische Darstellung eines Verfahrens 300 zum Prüfen eines Computers eines Computersystems gemäß einer Ausführungsform.

Mit dem Verfahren 300 kann ein bestimmter Computers 101 eines bestimmten Computersystems in einem Prüfnetzwerk geprüft werden, wobei das Prüfnetzwerk eine Prüfinstanz 103 zur Prüfung von Computern des Computersystems umfasst, und wobei der bestimmte Computer 101 ein Testobjekt 101 ist, wie oben zu den Figuren 1 und 2 näher beschrieben. Das Verfahren 300 umfasst die folgenden Schritte: Erzeugen 301 eines virtuellen Testobjekts 109 zur Emulation des Testobjekts 101 auf einem Simulationsserver 105, beispielsweise entsprechend der Beschreibung zu den Figuren 1 und 2; und Anweisen der Prüfinstanz 103, das auf dem Simulationsserver 105 erzeugte virtuelle Testobjekt 109 anstelle des bestimmten Computers 101 zu prüfen, beispielsweise entsprechend der Beschreibung zu den Figuren 1 und 2.

Das Verfahren 300 kann ferner den folgenden Schritt umfassen: Scannen des virtuellen Testobjekts 109 nach zumindest einer der folgenden Daten: Softwarestände von auf dem Testobjekt 101 installierter Software, Patchstände von auf dem Testobjekt 101 installierter Patches, Konfigurationsstände von Konfigurationen des Testobjekts 101, beispielsweise entsprechend der Beschreibung zu den Figuren 1 und 2.

Das Verfahren 300 kann ferner die folgenden fünf Schritte P1, P2, P3, P4, P5 umfassen, die beispielsweise auf der Steuerungsinstanz 107 wie oben zu den Figuren 1 und 2 beschrieben, implementiert werden können: Prüfen (P1) ob Daten 111 des Testobjekts 101 auf dem Simulationsserver 105 vorhanden sind; bei Vorhandensein von Daten 111 des Testobjekts 101: Anweisen des Simulationsservers 105, ein virtuelles Testobjekt 109 basierend auf den Daten 111 des Testobjekts 101 zu erzeugen (P2); Anweisen der Prüfinstanz 103, das virtuelle Testobjekt 109 zu prüfen (P3); Empfangen (P4) von Ergebnissen der Prüfung des virtuellen Testobjekts 109; und Löschen (P5) des virtuellen Testobjekts 109 auf dem Simulationsserver 105.

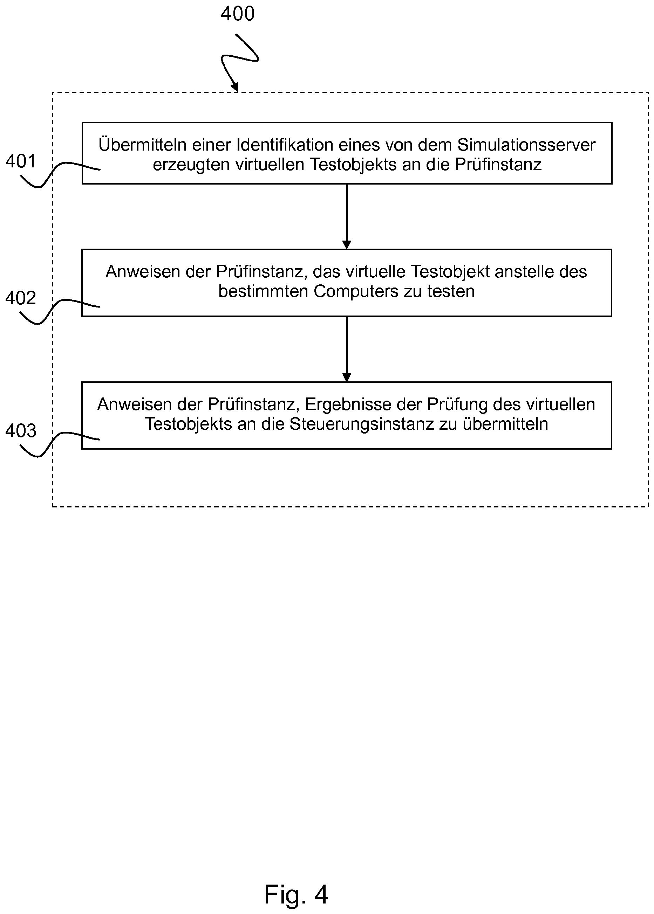

Fig. 4 zeigt eine schematische Darstellung eines Anwendungsprogramms 400 einer anwendungsprogrammierbaren Schnittstelle zwischen einer Steuerungsinstanz und einer Prüfinstanz gemäß einer Ausführungsform. Die anwendungsprogrammierbare Schnittstelle kann beispielsweise eine Prüfschnittstelle 106 zwischen einer Steuerungsinstanz 107 und einer Prüfinstanz 103 in einem Prüfsystem 100, 200 sein, wie oben zu den Figuren 1 und 2 näher beschrieben.

Das Computerprogramm 400 umfasst ein erstes Programmmodul 401, ein zweites Programmmodul 402 und ein drittes Programmmodul 403. Das erstes Programmmodul 401 ist ausgelegt, der Prüfinstanz 103 eine Identifikation eines von dem Simulationsserver 105 erzeugten virtuellen Testobjekts 109 zu übermitteln, beispielsweise eine Adresse der Datei 111 mit Daten des Testobjekts 101. Das zweite Programmmodul 402 ist ausgelegt, die Prüfinstanz 103 anzuweisen, das virtuelle Testobjekt 109 anstelle des bestimmten Computers 101 zu prüfen. Das dritte Programmmodul 403 ist ausgelegt, die Prüfinstanz 103 anzuweisen, Ergebnisse der Prüfung des virtuellen Testobjekts 303 an die Steuerungsinstanz 107 zu übermitteln, beispielsweise in einem hierfür angelegten Speicher der Steuerungsinstanz 107 abzulegen.

Das Computerprogramm 400 kann ferner ein viertes Programmmodul umfassen, das ausgelegt ist, die Prüfinstanz 103 anzuweisen, das virtuelle Testobjekt 101 nach zumindest einer der folgenden Daten zu scannen: Softwarestände von auf dem Testobjekt 101 installierter Software, Patchstände von auf dem Testobjekt 101 installierter Patches, Konfigurationsstände von Konfigurationen des Testobjekts 101.

Ein weiterer Aspekt der Erfindung umfasst ein Computerprogrammprodukt, das direkt in den internen Speicher eines digitalen Computers geladen werden kann und Softwarecodeabschnitte umfasst, mit denen das zu Fig. 3 beschriebene Verfahren 300 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Simulationsserver veranlassen, ein virtuelles Testobjekt zur Emulation eines Testobjekts zu erzeugen; und eine Prüfinstanz anweisen, das auf dem Simulationsserver erzeugte virtuelle Testobjekt anstelle des bestimmten Computers zu testen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Computersystem wie in einer der Figuren 1 bis 2 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

Die Erfindung wird durch die unabhängigen Ansprüche 1, 9 und 11 definiert.

### Bezugszeichenliste

- 100:: Prüfsystem
- 101:: Testobjekt bzw. bestimmter Computer eines bestimmten Computersystems
- 102:: Testschnittstelle
- 103:: Prüfinstanz
- 104:: zweite Prüfschnittstelle (zwischen Simulationsserver und Prüfinstanz)
- 105:: Simulationsserver
- 106:: erste Prüfschnittstelle (zwischen Steuerungsinstanz und Prüfinstanz)
- 107:: Steuerungsinstanz
- 108:: Steuerungsschnittstelle (zwischen Steuerungsinstanz und Simulationsserver)
- 109:: virtuelles Testobjekt
- 111a:: auf Testobjekt erzeugte Daten des Testobjekts
- 111:: auf Simulationsserver empfangene Daten des Testobjekts
- 117:: Arbeitsplatzrechner
- T1:: Dateitransfer zwischen Testobjekt und Simulationsserver
- T2a:: Dateitransfer zwischen Testobjekt und Arbeitsplatzrechner
- T2b:: Dateitransfer zwischen Arbeitsplatzrechner und Simulationsserver

- 300:: Verfahren zum Prüfen
- 301:: 1. Verfahrensschritt: Erzeugen eines virtuellen Testobjekts
- 302:: 2. Verfahrensschritt: Anweisen der Prüfinstanz

- 400:: Computerprogramm für anwendungsprogrammierbare Schnittstelle zwischen Steuerungsinstanz und Prüfinstanz
- 401:: 1. Programmmodul
- 402:: 2. Programmmodul
- 403:: 3. Programmmodul

## Patentansprüche

1. Prüfsystem (100) zur Prüfung eines ein Testobjekt (101) bildenden Computers (101) eines Computersystems in einem Prüfnetzwerk, wobei das Prüfnetzwerk einen Prüfserver (103) zur Prüfung von Computern des Computersystems umfasst, wobei das Prüfsystem (100) die folgenden Merkmale umfasst:
einen Simulationsserver (105), welcher ausgebildet ist, das Testobjekt (101) zu emulieren; und
eine Steuerungsinstanz (107), insbesondere ein Steuerungsserver oder eine Applikationssoftware auf einem Steuerungsrechner, zum Steuern des Simulationsservers (105), wobei die Steuerungsinstanz (107) ausgebildet ist, den Simulationsserver (105) anzuweisen, ein virtuelles Testobjekt (109) zur Emulation des Testobjekts (101) zu erzeugen, wobei die Steuerungsinstanz (107) ferner ausgelegt ist, den Prüfserver (103) anzuweisen, das durch den Simulationsserver (105) erzeugte virtuelle Testobjekt (109) anstelle des Computers (101) zu prüfen, wobei das Prüfsystem (100) ausgebildet ist, Daten (111) des Testobjekts (101) zu empfangen und das Testobjekt (101) basierend auf den empfangenen Daten (111) auf dem Simulationsserver (105) zu emulieren, wobei das Prüfsystem (100) ausgebildet ist, die Daten (111) des Testobjekts (101) durch einen direkten Dateitransfer zwischen dem Testobjekt (101) und dem Prüfsystem (100) zu empfangen,
wobei die Steuerungsinstanz (107) ausgebildet ist, in regelmäßigen Abständen zu prüfen, ob Daten (111) eines neuen Testobjekts (101) auf dem Simulationsserver (105) vorhanden sind, und bei Vorhandensein der Daten (111) den Simulationsserver (105) anzuweisen, ein virtuelles Testobjekt (109) zur Emulation des neuen Testobjekts (101) zu erzeugen und den Prüfserver (103) anzuweisen, das virtuelle Testobjekt (109) zu prüfen.

2. Prüfsystem (100) nach Anspruch 1, wobei die Daten (111) des Testobjekts (101) zumindest eine der folgenden Informationen umfassen:
Softwarestände von auf dem Testobjekt (101) installierter Software,
Patchstände von auf dem Testobjekt (101) installierter Patches,
Konfigurationsstände von Konfigurationen des Testobjekts (101).

3. Prüfsystem (100) nach einem der vorstehenden Ansprüche,
wobei die Steuerungsinstanz (107) ausgebildet ist, über eine anwendungsprogrammierbare Schnittstelle Daten (111) und weitere Parameter zur Steuerung zu empfangen und den Simulationsserver (105) anzuweisen, ein virtuelles Testobjekt (109) zur Emulation des neuen Testobjekts (101) zu erzeugen und den Prüfserver (103) anzuweisen, das virtuelle Testobjekt (109) zu prüfen.

4. Prüfsystem (100) nach einem der vorstehenden Ansprüche,
wobei die Steuerungsinstanz (107) ausgebildet ist, Prüfergebnisse der Prüfung des virtuellen Testobjekts von dem Prüfserver zu empfangen.

5. Prüfsystem (100) nach einem der vorstehenden Ansprüche, umfassend:
eine erste Prüfschnittstelle (106) zwischen der Steuerungsinstanz (107) und dem Prüfserver (103), wobei die erste Prüfschnittstelle (106) eine anwendungsprogrammierbare Schnittstelle umfasst.

6. Prüfsystem (100) nach einem der vorstehenden Ansprüche, umfassend:
eine zweite Prüfschnittstelle (104) zwischen dem Simulationsserver (105) und dem Prüfserver (103), wobei die zweite Prüfschnittstelle (104) ausgebildet ist, von dem Prüfserver (103) bereitgestellte Plug-Ins zum Prüfen des virtuellen Testobjekts (109) auf den Simulationsserver (105) zu laden.

7. Prüfsystem (100) nach Anspruch 6,
wobei der Simulationsserver (105) ausgelegt ist, über die von dem Prüfserver (103) bereitgestellten Plug-Ins das virtuelle Testobjekt (109) nach einem vorbestimmten Softwarestand, Patchstand oder Konfigurationsstand zu scannen.

8. Prüfsystem (100) nach einem der vorstehenden Ansprüche,
wobei der Simulationsserver (105) über Zugangsdaten zu dem Testobjekt (101) verfügt, die nur auf dem virtuellen Testobjekt (109) und nur für einen Zeitraum des Prüfens des virtuellen Testobjekts (109) gültig sind.

9. Verfahren zum Prüfen eines ein Testobjekt (101) bildenden Computers (101) eines Computersystems in einem Prüfnetzwerk mittels eines Prüfsystems (100), wobei das Prüfnetzwerk einen Prüfserver (103) zur Prüfung von Computern des Computersystems umfasst, und wobei das Prüfsystem (100) einen Simulationsserver (105) und eine Steuerungsinstanz (107) umfasst, mit den folgenden Schritten:
Erzeugen eines virtuellen Testobjekts (109) zur Emulation des Testobjekts (101) auf dem Simulationsserver (105);
Anweisen des Prüfservers (103) durch die Steuerungsinstanz (107), das auf dem Simulationsserver (105) erzeugte virtuelle Testobjekt (109) anstelle des bestimmten Computers (101) zu prüfen;
wobei das Erzeugen des virtuellen Testobjekts (109) auf dem Simulationsserver (105) und das Anweisen des Prüfservers (103) folgendes umfassen:
Prüfen (P1) in regelmäßigen Abständen ob Daten (111) eines neuen Testobjekts (101) auf dem Simulationsserver (105) vorhanden sind, wobei die Daten (111) durch einen direkten Dateitransfer zwischen dem Testobjekt (101) und dem Prüfsystem (100) übertragen werden;
bei Vorhandensein von Daten (111) eines neuen Testobjekts (101): Anweisen des Simulationsservers (105), ein virtuelles Testobjekt (109) basierend auf den Daten (111) des neuen Testobjekts (101) zu erzeugen (P2);
Anweisen des Prüfservers (103) durch die Steuerungsinstanz (107), das virtuelle Testobjekt (109) basierend auf den Daten (111) des neuen Testobjekts (101) zu prüfen (P3);
Empfangen (P4) von Ergebnissen der Prüfung des virtuellen Testobjekts (109); und
Löschen (P5) des virtuellen Testobjekts (109) auf dem Simulationsserver (105).

10. Verfahren nach Anspruch 9, ferner umfassend:
Scannen des virtuellen Testobjekts (109) nach zumindest einer der folgenden Daten:
Softwarestände von auf dem Testobjekt (101) installierter Software,
Patchstände von auf dem Testobjekt (101) installierter Patches,
Konfigurationsstände von Konfigurationen des Testobjekts (101).

11. Computerprogramm für eine anwendungsprogrammierbare Schnittstelle (113) zwischen der Steuerungsinstanz (107) eines Prüfsystems (100) nach einem der Ansprüche 1 bis 9 und einem Prüfserver (103) in einem Prüfnetzwerk, umfassend:
ein erstes Programmmodul, das ausgelegt ist, dem Prüfserver (103) eine Identifikation eines von dem Simulationsserver (105) erzeugten virtuellen Testobjekts (109) zu übermitteln;
ein zweites Programmmodul, das ausgelegt ist, den Prüfserver (103) anzuweisen, das virtuelle Testobjekt (109) anstelle des bestimmten Computers (101) zu prüfen; und
ein drittes Programmmodul, das ausgelegt ist, den Prüfserver (103) anzuweisen, Ergebnisse der Prüfung des virtuellen Testobjekts (109) an die Steuerungsinstanz (107) zu übermitteln.

12. Computerprogramm nach Anspruch 11, umfassend:
ein viertes Programmmodul, das ausgelegt ist, den Prüfserver (103) anzuweisen, das virtuelle Testobjekt (101) nach zumindest einer der folgenden Daten zu scannen:
Softwarestände von auf dem Testobjekt (101) installierter Software,
Patchstände von auf dem Testobjekt (101) installierter Patches,
Konfigurationsstände von Konfigurationen des Testobjekts (101).

## Claims

1. A test system (100) for testing a computer (101) forming a test object (101) of a computer system in a test network, wherein the test network comprises a test server (103) for testing computers of the computer system, wherein the test system (100) comprises the following features:
a simulation server (105) configured to emulate the test object (101); and
a control entity (107), in particular a control server or an application software on a control computer, for controlling the simulation server (105), wherein the control entity (107) is configured to instruct the simulation server (105) to generate a virtual test object (109) for emulating the test object (101), wherein the control entity (107) is further configured to instruct the test server (103) to test the virtual test object (109) generated by the simulation server (105) instead of the computer (101), wherein the test system (100) is configured to receive data (111) of the test object (101) and to emulate the test object (101) on the simulation server (105) based on the received data (111), wherein the test system (100) is configured to receive the data (111) of the test object (101) by a direct file transfer between the test object (101) and the test system (100),
wherein the control entity (107) is configured to test at regular intervals if data (111) of a new test object (101) are available on the simulation server (105) and, in presence of data (111) to instruct the simulation server (105) to generate a virtual test object (109) for emulating the new test object (101) and to instruct the test server (103) to test the virtual test object (109).

2. The test system (100) according to claim 1, wherein the data (111) of the test object (101) comprise at least one of the following information:
software statuses of software installed on the test object (101),
patch statuses of patches installed on the test object (101),
configuration statuses of configurations of the test object (101).

3. The test system (100) according to any one of the preceding claims,
wherein the control entity (107) is configured to receive data (111) and further parameters for controlling via an application-programmable interface and to instruct the simulation server (105) to generate a virtual test object (109) for emulating the new test object (101) and to instruct the test server (103) to test the virtual test object (109).

4. The test system (100) according to any one of the preceding claims,
wherein the control entity (107) is configured to receive test results of the test of the virtual test object from the test server.

5. The test system (100) according to any one of the preceding claims, comprising:
a first test interface (106) between the control entity (107) and the test server (103), wherein the first test interface (106) comprises an application-programmable interface.

6. The test system (100) according to any one of the preceding claims, comprising:
a second test interface (104) between the simulation server (105) and the test server (103), wherein the second test interface (104) is configured to load plug-ins provided by the test server (103) for testing the virtual test object (109) on the simulation server (105).

7. The test system (100) according to claim 6,
wherein the simulation server (105) is configured to scan the virtual test object (109) via the plug-ins provided by the test server (103) according to a predetermined software status, patch status or configuration status.

8. The test system (100) according to any one of the preceding claims,
wherein the simulation server (105) has access data to the test object (101), said access data being valid only on the virtual test object (109) and only for a period of testing the virtual test object (109).

9. A method for testing a computer (101) forming a test object (101) of a computer system in a test network by a test system (100), wherein the test network comprises a test server (103) for testing computers of the computer system, and wherein the test system (100) comprises a simulation server (105) and a control entity (107), comprising the following steps:
generating a virtual test object (109) for emulating the test object (101) on the simulation server (105);
instructing the test server (103), by the control entity (107), to test the virtual test object (109) generated on the simulation server (105) instead of the particular computer (101), wherein generating the virtual test object (109) on the simulation server (105) and
instructing the test server (103) comprise the following:
testing (PI), at regular intervals, if data (111) of a new test object (101) are available on the simulation server (105), wherein the data (111) are transmitted by a direct file transfer between the test object (101) and the test system (100);
if data (111) of a new test object (101) are available: instructing the simulation server (105) to generate (P2) a virtual test object (109) based on the data (111) of the new test object (101);
instructing the test server (103), by the control entity (107), to test (P3) the virtual test object (109) based on the data (111) of the new test object (101);
receiving (P4) results of the test of the virtual test object (109); and
deleting (P5) the virtual test object (109) on the simulation server (105).

10. The method according to claim 9, further comprising:
scanning the virtual test object (109) for at least one of the following data:
software statuses of software installed on the test object (101),
patch statuses of patches installed on the test object (101),
configuration statuses of configurations of the test object (101).

11. A computer program for an application-programmable interface (113) between the control entity (107) of a test system (100) according to any one of claims 1 to 9 and a test server (103) in a test network, comprising:
a first program module configured to transmit an identification of a virtual test object (109) generated by the simulation server (105) to the test server (103);
a second program module configured to instruct the test server (103) to test the virtual test object (109) instead of the particular computer (101); and
a third program module configured to instruct the test server (103) to transmit results of the test of the virtual test object (109) to the control entity (107).

12. The computer program according to claim 11, comprising:
a fourth program module configured to instruct the test server (103) to scan the virtual test object (101) for at least one of the following data:
software statuses of software installed on the test object (101),
patch statuses of patches installed on the test object (101),
configuration statuses of configurations of the test object (101).

## Revendications

1. Système de contrôle (100), pour l'examen d'un ordinateur (101) d'un système informatique dans un réseau de contrôle constituant un objet d'essai (101), où le réseau de contrôle comprend un serveur de contrôle (103) pour l'examen d'ordinateurs du système informatique, où le système de contrôle (100) présente les caractéristiques suivantes :
un serveur de simulation (105), prévu pour émuler l'objet d'essai (101) ; et
une instance de commande (107), en particulier un serveur de commande ou un programme d'application sur un ordinateur de commande, pour la commande du serveur de simulation (105), où l'instance de commande (107) est prévue pour commander la génération par le serveur de simulation (105) d'un objet d'essai virtuel (109) pour l'émulation de l'objet d'essai (101), où l'instance de commande (107) est en outre prévue pour commander l'examen par le serveur de contrôle (103) de l'objet d'essai virtuel (109) généré par le serveur de simulation (105) au lieu de l'ordinateur (101), où le système de contrôle (100) est prévu pour recevoir des données (111) de l'objet d'essai (101) et pour émuler l'objet d'essai (101) sur la base des données (111) reçues sur le serveur de simulation (105), où le système de contrôle (100) est prévu pour recevoir les données (111) de l'objet d'essai (101) par transfert de données direct entre l'objet d'essai (101) et le système de contrôle (100),
où l'instance de commande (107) est prévue pour contrôler à intervalles réguliers si des données (111) d'un nouvel objet d'essai (101) sont présentes sur le serveur de simulation (105), et, en cas de présence des données (111), commander la génération par le serveur de simulation (105) d'un objet d'essai virtuel (109) pour l'émulation du nouvel objet d'essai (101) et commander l'examen de l'objet d'essai virtuel (109) par le serveur de contrôle (103).

2. Système de contrôle (100) selon la revendication 1, où les données (111) de l'objet d'essai (101) comprennent au moins une des informations suivantes :
versions de logiciel du logiciel installé sur l'objet d'essai (101),
versions de correctif des correctifs installés sur l'objet d'essai (101),
versions de configuration des configurations l'objet d'essai (101).

3. Système de contrôle (100) selon l'une des revendications précédentes, où l'instance de commande (107) est prévue pour recevoir via une interface programmable par applications des données (111) et d'autres paramètres de commande, et pour commander la génération par le serveur de simulation (105) d'un objet d'essai virtuel (109) pour l'émulation du nouvel objet d'essai (101) et commander l'examen de l'objet d'essai virtuel (109) par le serveur de contrôle (103).

4. Système de contrôle (100) selon l'une des revendications précédentes,
où l'instance de commande (107) est prévue pour recevoir du serveur de contrôle des résultats de contrôle suite à l'examen de l'objet d'essai virtuel.

5. Système de contrôle (100) selon l'une des revendications précédentes, comprenant :
une première interface de contrôle (106) entre l'instance de commande (107) et le serveur de contrôle (103), ladite première interface de contrôle (106) comprenant une interface programmable par application.

6. Système de contrôle (100) selon l'une des revendications précédentes, comprenant :
une deuxième interface de contrôle (104) entre le serveur de simulation (105) et le serveur de contrôle (103), ladite deuxième interface de contrôle (104) étant prévue pour charger des plug-in délivrés par le serveur de contrôle (103) pour l'examen de l'objet d'essai virtuel (109) sur le serveur de simulation (105).

7. Système de contrôle (100) selon la revendication 6,
où le serveur de simulation (105) est prévu pour balayer l'objet d'essai virtuel (109) au moyen des plug-in délivrés par le serveur de contrôle (103) à la recherche d'une version logicielle définie, d'une version de correctif définie ou d'une version de configuration définie.

8. Système de contrôle (100) selon l'une des revendications précédentes,
où le serveur de simulation (105) dispose de données d'accès à l'objet d'essai (101) qui ne sont valides que sur l'objet d'essai virtuel (109) et seulement pendant une durée d'examen de l'objet d'essai virtuel (109).

9. Procédé de contrôle au moyen d'un système de contrôle (100) d'un ordinateur (101) d'un système informatique dans un réseau de contrôle constituant un objet d'essai (101), où le réseau de contrôle comprend un serveur de contrôle (103) pour l'examen d'ordinateurs du système informatique, et où le système de contrôle (100) comprend un serveur de simulation (105) et une instance de commande (107), comprenant les étapes suivantes :
génération d'un objet d'essai virtuel (109) pour l'émulation de l'objet d'essai (101) sur le serveur de simulation (105) ;
commande de l'instance de commande (107), d'examen par le serveur de contrôle (103) de l'objet d'essai virtuel (109) généré sur le serveur de simulation (105) au lieu de l'ordinateur (101) déterminé ;
où la génération de l'objet d'essai virtuel (109) sur le serveur de simulation (105) et la commande du serveur de contrôle (103) comprennent :
le contrôle (P1) à intervalles réguliers si des données (111) d'un nouvel objet d'essai (101) sont présentes sur le serveur de simulation (105), lesdites données (111) étant transmises par transfert direct de données entre l'objet d'essai (101) et le système de contrôle (100) ;
en cas de présence de données (111) d'un nouvel objet d'essai (101) : commande de génération (P2) par le serveur de simulation (105) d'un objet d'essai virtuel (109) sur la base des données (111) du nouvel objet d'essai (101) ;
commande de l'instance de commande (107), d'examen (P3) par le serveur de contrôle (103) de l'objet d'essai virtuel (109) sur la base des données (111) du nouvel objet d'essai (101) ;
réception (P4) de résultats de contrôle de l'objet d'essai virtuel (109) ; et
suppression (P5) de l'objet d'essai virtuel (109) sur le serveur de simulation (105).

10. Procédé selon la revendication 9, comprenant en outre :
le balayage de l'objet d'essai virtuel (109) à la recherche d'au moins une des données suivantes :
versions de logiciel du logiciel installé sur l'objet d'essai (101),
versions de correctif des correctifs installés sur l'objet d'essai (101),
versions de configuration des configurations l'objet d'essai (101).

11. Programme informatique pour un interface programmable par applications (113) entre l'instance de commande (107) d'un système de contrôle (100) selon l'une des revendications 1 à 9 et un serveur de contrôle (103) dans un réseau de contrôle, comprenant :
un premier module de programme, prévu pour transmettre au serveur de contrôle (103) une identification d'un objet d'essai virtuel (109) généré par le serveur de simulation (105) ;
un deuxième module de programme, prévu pour commander l'examen par le serveur de contrôle (103) de l'objet d'essai virtuel (109) au lieu de l'ordinateur (101) déterminé ; et
un troisième module de programme, prévu pour commander la transmission par le serveur de contrôle (103) de résultats de contrôle de l'objet d'essai virtuel (109) à l'instance de commande (107).

12. Programme informatique selon la revendication 11, comprenant :
un quatrième module de programme, prévu pour commander le balayage par le serveur de contrôle (103) de l'objet d'essai virtuel (101) à la recherche d'au moins une des données suivantes:
versions de logiciel du logiciel installé sur l'objet d'essai (101),
versions de correctif des correctifs installés sur l'objet d'essai (101),
versions de configuration des configurations l'objet d'essai (101).
